# EUROPÄISCHE PATENTSCHRIFT

(11) **EP 0 574 759 B1**
(45) Veröffentlichungstag und Bekanntmachung des Hinweises auf die Patenterteilung: **01.03.1995**
(21) Anmeldenummer: 93108639.1
(22) Anmeldetag: 28.05.1993
(51) Int. Cl.: F16D 59/02

(54) **Verfahren zum weichen Betrieb einer Bremse**
Process for the soft operation of a brake
Procédé pour le fonctionnement doux d'un frein

(30) Priorität: 19.06.1992 DE 4220080
(43) Veröffentlichungstag der Anmeldung: 22.12.1993
(73) Patentinhaber: ELEKTRO-MECHANIK GMBH, D-57482 Wenden (DE)
(72) Erfinder: Sasse, Bernhard, W-5942 Kirchhundem 1 (DE); Zimmermann, Peter, W-5963 Wenden (DE)
(74) Vertreter: Erbacher, Alfons, Dipl.-Ing.

(56) Entgegenhaltungen:
- DE-A- 3 231 319
- DE-U- 1 690 019

## Beschreibung

Die Erfindung betrifft ein Verfahren zum weichen Betrieb einer Bremse mittels eines Bremslüftgerätes mit einem Motor und einer Zentrifugalpumpe mit einem Hydraulikzylinder, in dem ein Arbeitskolben geführt und über eine Kolbenstange mit der Bremse verbunden ist, wobei bei eingeschaltetem Motor der Arbeitskolben von seiner unteren Endlage mittels der unter den Kolben geförderten Betriebsflüssigkeit gegen eine äußere Kraft in seine obere Endlage gebracht und dabei die Bremse gelüftet wird und bei abgeschaltetem Motor der Arbeitskolben unter Einwirkung der äußeren Kraft wieder in seine untere Endlage gebracht wird und dabei die Bremse einfällt.

Ein derartiges Bremslüftgerät und das Verfahren zu seiner Betätigung sind aus der Firmendruckschrift der EMG, Wendener Hütte, "Elektrohydraulische Hubgeräte ELO", 1987, bekannt. Das Bremslüftgerät leistet Hubarbeit auf elektrohydraulischem Weg. Es setzt die zugeführte elektrische Energie über die Hydraulik in mechanische Arbeit mit geradliniger Bewegung um. Elektromotor, Kreiselpumpe und Hydraulikzylinder mit Kolben und Kolbenstange sind in einer kompakten Baueinheit verbunden.

Bei abgeschaltetem Motor befindet sich der Kolben in der unteren Endlage, die Bremse ist in dieser Stellung eingefallen und steht unter der Wirkung einer äußeren, auf die Kolbenstange wirkenden Kraft. Bei eingeschaltetem Motor wird die Bremse gelüftet. Durch das vom Motor angetriebene Pumpenrad der Kreiselpumpe wird die Betriebsflüssigkeit unter den Arbeitskolben gefördert. Da das Pumpenrad radiale Flügel besitzt, hat die Drehrichtung des Motors keinen Einfluß auf die Wirkungsweise des Gerätes.

Infolge des erzeugten Drucks durchläuft der Arbeitskolben seinen Weg in die obere Endlage gegen eine äußere Kraft. Die dabei geleistete Arbeit wird über die Kolbenstange auf die zu betätigende Einrichtung übertragen. In der oberen Endlage des Arbeitskolbens geht die Leistungsaufnahme des Motors aufgrund der Motor-und Pumpenkennlinie etwa auf die Hälfte der beim Hubvorgang aufgenommenen Leistung zurück. Der Druck erreicht dabei seinen Höchstwert. Somit wird der Elektromotor in der oberen Endlage entlastet.

Nach dem Abschalten des Motors geht der Kolben unter dem Einfluß einer äußeren Kraft, z. B. der Kraft einer Bremsfeder oder eines Gewichtes, in die Ausgangsstellung zurück. Die dabei erzielten Stellzeiten sind von der Größe der äußeren Belastung abhängig.

Aus der DE-OS 32 31 319 und dem DE-GM 16 90 019 sind elektrohydraulische Verstelleinrichtungen mit einer Pumpe für die Betriebsflüssigkeit bekannt, die einen ähnlichen Aufbau wie das eingangs definierte Bremslüftgerät aufweisen. Während bei diesem Bremslüftgerät die Stellzeiten von der Größe der äußeren Belastung abhängig sind, werden sie bei den vorgenannten Ausführungsformen durch ein entsprechend ausgestaltetes Drosselventil bestimmt.

Ein Nachteil des bekannten Bremslüftgerätes besteht darin, daß durch den relativ harten Einfall der Bremsbeläge bei den nachgeschalteten Betriebseinrichtungen häufig Schwingungen bzw. kurzzeitig hohe dynamische Belastungsspitzen auftreten. Diese Belastungen können zu Schäden an den Betriebseinrichtungen führen.

Der Erfindung liegt die Aufgabe zugrunde, ein Verfahren zur Betätigung des bekannten Bremslüftgerätes verfügbar zu machen, mit dem man den Kraftaufbau nach Anlegen der Bremsbeläge zeitlich steuern kann, um eine sanfte Abbremsung zu ermöglichen.

Diese Aufgabe wird gemäß der Erfindung dadurch gelöst, daß bei eingeschaltetem Motor die Kolbenstange einen Luftkolben freigibt, der sich unter der Einwirkung einer Feder nach oben bewegt, wobei der Hub des Luftkolbens kleiner als der Hub des Arbeitskolbens ist, daß bei abgeschaltetem Motor zunächst nur der Arbeitskolben nach unten bewegt wird, daß nach einem vorbestimmten Kolbenweg der Arbeitskolben über die Kolbenstange auf den Luftkolben aufsetzt, daß anschließend bei der gemeinsamen Abwärtsbewegung des Arbeitskolbens und des Luftkolbens die Luft unter dem Luftkolben komprimiert und damit eine Gegenkraft aufgebaut wird und der Arbeitskolben mit verminderter Geschwindigkeit seine untere Endlage erreicht und die Bremse unter Wirkung dieser Geschwindigkeit mit verminderter Kraft einfällt und daß daraufhin die Luft unter dem Luftkolben entspannt wird, wobei bei bereits eingefallener Bremse sich die volle Bremskraft aufbaut
oder dadurch,
daß bei eingeschaltetem Motor zunächst gleichzeitig mit dem Arbeitkolben ein Hilfskolben mittels der auch unter dem Hilfskolben geförderten Betriebsflüssigkeit gegen die Kraft einer Feder bis zu einem Anschlag nach oben bewegt wird und anschließend der Arbeitskolben seine obere Endlage erreicht, wobei der Hub des Arbeitskolbens größer als der Hub des Hilfskolbens ist, daß bei abgeschaltetem Motor zunächst nur der Arbeitskolben nach unten bewegt wird, während die Betriebsflüssigkeit unter dem Hilfskolben verbleibt, daß nach einem vorbestimmten Kolbenweg der Arbeitskolben über die Kolbenstange auf den Hilfskolben und damit auf die vorgespannte Feder aufsetzt, daß der Arbeitskolben gegen die Federkraft der Feder mit verminderter Geschwindigkeit seine untere Endlage erreicht und die Bremse unter Wirkung dieser Kraft einfällt und daß daraufhin die Betriebsflüssigkeit unter dem Hilfskolben abgelassen wird, wobei sich die Feder entspannt und bei bereits eingefallener Bremse die volle Bremskraft aufgebaut wird.

Diesen beiden Lösungen liegt das Lösungsprinzip zugrunde, der Bremskraft des Bremslüftgerätes eine zeitlich veränderbare, wegmäßig begrenzte Kraft im Bereich der Endlage des Arbeitskolbens entgegenwirken zu lassen. Diese Gegen kraft wird entweder mechanisch-hydraulisch oder pneumatisch erzeugt. Der Aufbau der Bremskraft erfolgt beim Einfallen der Bremse, ohne daß der Arbeitskolben noch einen Kolbenweg ausführt.

Das Wesen der Erfindung soll anhand zweier Ausführungsbeispiele näher erläutert werden.

Es zeigen
- Fig. 1: den schematischen Aufbau eines Bremslüftgerätes für sanfte Abbremsung in pneumatischer Ausführung;
- Fig. 2: ein Diagramm zur Erläuterung des Bremsverfahrens und
- Fig. 3: den schematischen Aufbau eines Bremslüftgerätes zur Sanftabbremsung in mechanisch-hydraulischer Ausführung.

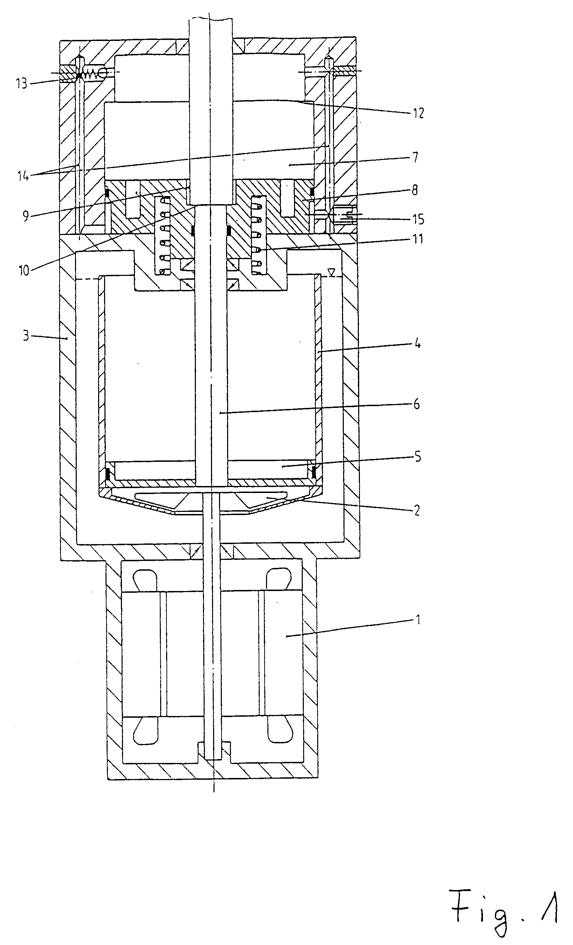

In der Fig. 1 ist das Bremslüftgerät bei abgeschaltetem Motor dargestellt, d. h. in der Betriebsweise, in welcher der Arbeitskolben seine untere Endstellung einnimmt. Der Elektromotor 1 treibt das Flügelrad 2 einer Kreiselpumpe an, wodurch bei laufendem Motor die in dem Gehäuse 3 und dem Hydraulikzylinder 4 befindliche Hydraulikflüssigkeit unter dem Arbeitskolben 5 gefördert wird und diesen nach oben bewegt. Der Arbeitskolben ist mit der Kolbenstange 6 verbunden, die in nicht dargestellter Weise mit der zu betätigenden Betriebseinrichtung, beispielsweise einer Bremse, verbunden ist. Oberhalb des Hydraulikzylinders 4 befindet sich, von diesem hermetisch getrennt, ein Luftzylinder 7 mit einem Luftkolben 8, der in Fig. 1 auch in seiner unteren Endstellung, d. h. bei abgeschaltetem Motor, eingezeichnet ist. Die Kolbenstange 6 ist konzentrisch und gleitend durch den Luftkolben 8 geführt. Der Luftkolben weist eine Ausnehmung 9 auf, die als Anschlag für einen Absatz 10 der Kolbenstange dient. Auf diese Weise wird der Luftkolben ebenso wie der Arbeitskolben durch die auf die Kolbenstange einwirkende äußere Kraft bei abgeschaltetem Motor in seiner unteren Endlage gehalten.

Bei eingeschaltetem Motor treibt die unter Druck kommende Betriebsflüssigkeit den Arbeitskolben 5 gegen die auf die Kolbenstange wirkende äußere Kraft nach oben. Dabei hebt die Kolbenstange 6 mit ihrem Ansatz 10 von dem Luftkolben 8 ab, der dann unter Wirkung der Stellfeder 11 sich nach oben bewegt. Die Aufwärtsbewegung des Luftkolbens wird durch einen Anschlag 12 begrenzt, der seine obere Endlage definiert. Bei der Aufwärtsbewegung des Luftkolbens 8 wird die über dem Luftkolben befindliche Luft über ein Sperrventil 13 und die Luftkanäle 14 in den sich bei der Aufwärtsbewegung unterhalb des Kolbens ausbildenden Raum gedrückt. Das Sperrventil 13 verhindert ein Ausströmen der Luft bei einer auf den Luftkolben wirkenden Kraft.

Bei abgeschaltetem Elektromotor bewegen sich der Arbeitskolben 5 und die Kolbenstange 6 nach unten, wobei der Luftkolben 8 zunächst in seiner oberen Endlage verbleibt. Erst wenn der Ansatz 10 der Kolbenstange 6 auf dem Boden der Ausnehmung 9 aufliegt, wirkt die äußere Kraft über die Kolbenstange 6 und den Luftkolben 8 ein. Bei weiterer Abwärtsbewegung der Kolbenstange 6 und des Arbeitskolbens 5 wird die Luft unter dem Luftkolben 8 komprimiert, wodurch sich eine zu der äußeren Kraft entgegenwirkende Kraft aufbaut.

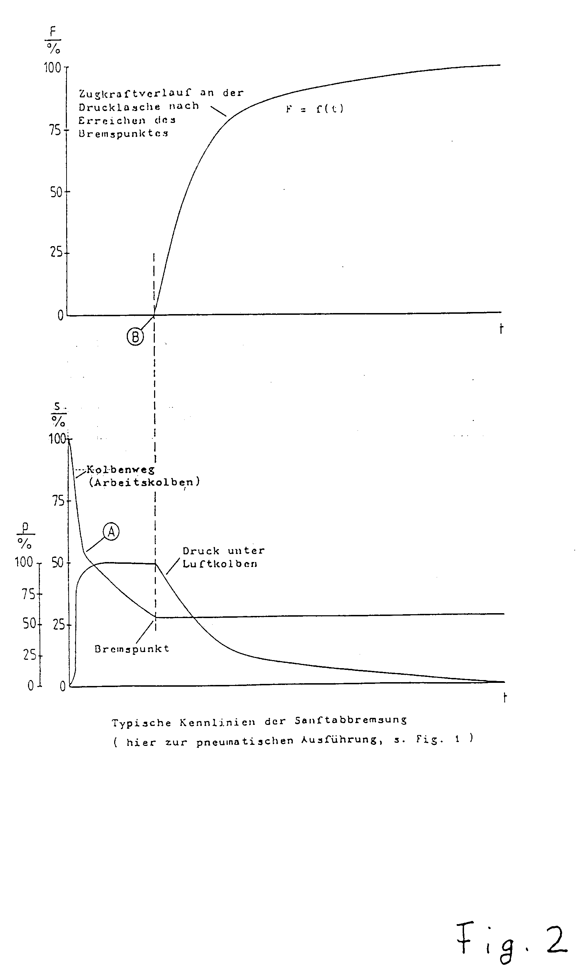

Das führt dazu, daß die Bremse mit um die Gegenkraft verminderte Kraft einfällt und dabei die Bremsbacken sanft zum Anliegen kommen. Währenddessen entweicht die komprimierte Luft unterhalb des Luftkolbens 8 über die einstellbare Nadeldüse 15 in den Raum oberhalb des Luftkolbens 8 und sich dabei die volle Bremskraft aufbaut. Anschließend wird die Nadeldüse 15 betätigt, wodurch die Luft unterhalb des Luftkolbens 8 entweichen kann und sich dabei die volle Bremskraft aufbaut. Die entsprechenden Verhältnisse sind in Fig. 2 dargestellt.

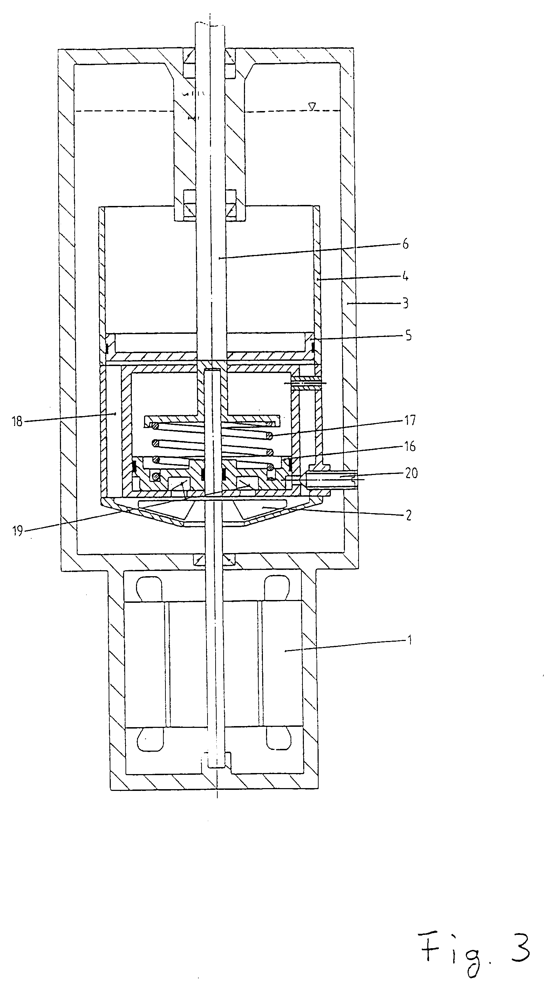

Bei der Ausführungsform gem. Fig. 3 sind die gleichen Teile wie in Fig. 1 auch mit den gleichen Bezugszeichen versehen. Es ist wieder die Betriebsstellung bei abgeschaltetem Motor dargestellt. Neben dem Arbeitskolben 5 ist noch ein Hilfskolben 16 vorhanden, der unter der Krafteinwirkung einer Druckfeder 17 steht. Bei eingeschaltetem Elektromotor 1 wird der Pumpendruck über den Ringkanal 18 auf den Arbeitskolben 5 und über sich öffnende Klappventile 19 auf den Hilfskolben 16 übertragen. Wenn die Kolbenstange 6 einen vorbestimmten Weg bis zu der oberen Endlage des Arbeitskolbens 5 zurückgelegt hat, fährt der Hilfskolben gegen einen Anschlag und bestimmt damit seine obere Endlage. In der oberen Endlage ist somit der Hub des Hilfskolbens 16 kleiner als der Hub des Arbeitskolbens 5. Bei abgeschaltetem Elektromotor 1 schließen die Klappventile 19 und halten somit den Hilfskolben 16 in seiner oberen Endlage, wobei er unter dem Druck der vorgespannten Druckfeder 17 steht. Zunächst bewegt sich der Arbeitskolben 5 unter Einwirkung der äußeren Kraft nach unten, bis er über die Kolbenstange 6 auf den Hilfskolben 16 und damit auf die Druckfeder 17 aufsetzt. Die Druckfeder bewirkt eine zur äußeren Kraft entgegengerichtete Kraft, so daß, ebenso wie beim Ausführungsbeispiel nach Fig. 1, die Bremse unter verminderter Kraft einfällt.

Anschließend wird über die Düse 20 die Betriebsflüssigkeit aus dem Raum unterhalb des Hilfskolbens 16 abgelassen, die Druckfeder 17 entspannt sich bei der Abwärtsbewegung des Hilfskolbens 16, so daß sich die Bremskraft bis zu der vollen äußeren Kraft aufbauen kann.

## Patentansprüche

1. Verfahren zum weichen Betrieb einer Bremse mittels eines Bremslüftgerätes mit einem Motor (1) und einer Zentrifugalpumpe mit einem Hydraulikzylinder (4), in dem ein Arbeitskolben (5) geführt und über eine Kolbenstange (6) mit der Bremse verbunden ist, wobei bei eingeschaltetem Motor (1) der Arbeitskolben (5) von seiner unteren Endlage mittels der unter den Kolben geförderten Betriebsflüssigkeit gegen eine äußere Kraft in seine obere Endlage gebracht und dabei die Bremse gelüftet wird und bei abgeschaltetem Motor (1) der Arbeitskolben (5) unter Einwirkung der äußeren Kraft wieder in seine untere Endlage gebracht wird und dabei die Bremse einfällt,
**dadurch gekennzeichnet,**
daß bei eingeschaltetem Motor (1) die Kolbenstange (6) einen Luftkolben (8) freigibt, der sich unter der Einwirkung einer Feder (11) nach oben bewegt, wobei der Hub des Luftkolbens (8) kleiner als der Hub des Arbeitskolbens (5) ist, daß bei abgeschaltetem Motor (1) zunächst nur der Arbeitskolben (5) nach unten bewegt wird, daß nach einem vorbestimmten Kolbenweg der Arbeitskolben (5) über die Kolbenstange (6) auf den Luftkolben (8) aufsetzt, daß anschließend bei der gemeinsamen Abwärtsbewegung des Arbeitskolbens (5) und des Luftkolbens (8) die Luft unter dem Luftkolben (8) komprimiert und damit eine Gegenkraft aufgebaut wird und der Arbeitskolben (5) mit verminderter Geschwindigkeit seine untere Endlage erreicht und die Bremse unter Wirkung dieser Geschwindigkeit mit verminderter Kraft einfällt und daß daraufhin die Luft unter dem Luftkolben (8) entspannt wird, wobei bei bereits eingefallener Bremse sich die volle Bremskraft aufbaut.

2. Verfahren zum weichen Betrieb einer Bremse mittels eines Bremslüftgerätes mit einem Motor (1) und einer Zentrifugalpumpe mit einem Hydraulikzylinder (4), in dem ein Arbeitskolben (5) geführt und über eine Kolbenstange (6) mit der Bremse verbunden ist, wobei bei eingeschaltetem Motor (1) der Arbeitskolben (5) von seiner unteren Endlage mittels der unter den Kolben geförderten Betriebsflüssigkeit gegen eine äußere Kraft in seine obere Endlage gebracht und dabei die Bremse gelüftet wird und bei abgeschaltetem Motor (1) der Arbeitskolben (5) unter Einwirkung der äußeren Kraft wieder in seine untere Endlage gebracht wird und dabei die Bremse einfällt,
**dadurch gekennzeichnet,**
daß bei eingeschaltetem Motor (1) zunächst gleichzeitig mit dem Arbeitskolben (5) ein Hilfskolben (16) mittels der auch unter dem Hilfskolben (16) geförderten Betriebsflüssigkeit gegen die Kraft einer Feder (17) bis zu einem Anschlag nach oben bewegt wird und anschließend der Arbeitskolben (5) seine obere Endlage erreicht, wobei der Hub des Arbeitskolbens (5) größer als der Hub des Hilfskolbens (16) ist, daß bei abgeschaltetem Motor (1) zunächst nur der Arbeitskolben (5) nach unten bewegt wird, während die Betriebsflüssigkeit unter dem Hilfskolben (16) verbleibt, daß nach einem vorbestimmten Kolbenweg der Arbeitskolben (5) über die Kolbenstange (6) auf den Hilfskolben (16) und damit auf die vorgespannte Feder (17) aufsetzt, daß der Arbeitskolben (5) gegen die Federkraft der Feder (17) mit verminderter Geschwindigkeit seine untere Endlage erreicht und die Bremse unter Wirkung dieser Kraft einfällt und daß daraufhin die Betriebsflüssigkeit unter dem Hilfskolben (16) abgelassen wird, wobei sich die Feder (17) entspannt und bei bereits eingefallener Bremse die volle Bremskraft aufgebaut wird.

3. Verfahren nach Anspruch 1,
**dadurch gekennzeichnet,**
daß die Luft unter dem Luftkolben (8) nach einer vorbestimmten zeitlichen Funktion entspannt wird.

4. Verfahren nach Anspruch 2,
**dadurch gekennzeichnet,**
daß die Betriebsflüssigkeit unter dem Hilfskolben (16) nach einer vorbestimmten zeitlichen Funktion abgelassen wird.

5. Verfahren nach einem der Ansprüche 1 bis 4,
**dadurch gekennzeichnet,**
daß die äußere Kraft, gegen die der Arbeitskolben (5) in seine obere Endstellung gefahren wird, durch eine c-Feder bestimmt wird.

6. Verfahren nach einem der vorhergehenden Ansprüche,
**dadurch gekennzeichnet,**
daß der Motor (1) ein Elektromotor ist.

## Claims

1. Method for the soft operation of a brake by means of a brake-lifting device with a motor (1) and a centrifugal pump with an hydraulic cylinder (4), in which a working piston (5) is guided and connected by way of a piston rod (6) with the brake, wherein the working piston (5) when the motor (1) is switched on is brought from its lower end position against an external force into an upper end position by means of the operating fluid conveyed below the piston and the brake is lifted in that case and the working piston (5) when the motor (1) is switched off is brought into its lower end position again under the influence of the external force and the brake in that case drops in, characterised thereby, that when the motor (1) is switched on, the piston rod (6) frees an air piston (8), which moves upwardly under the influence of a spring (11), wherein the stroke of the air piston (8) is smaller than the stroke of the working piston (5), that when the motor (1) is switched off, initially only the working piston (5) is moved downwardly, that the working piston (5) after a predetermined piston travel sets down by way of the piston rod (6) on the air piston (8), that the air below the air piston (8) is compressed subsequently during the common downward movement of the working piston (5) and the air piston (8) and a counterforce is built up thereby and the working piston (5) reaches its lower end position at reduced speed and the brake drops in with reduced force under the influence of this speed and that the air below the air piston (8) is relieved thereupon, whilst the full braking force builds up with the brake already dropped in.

2. Method for the soft operation of a brake by means of a brake-lifting device with a motor (1) and a centrifugal pump with an hydraulic cylinder (4), in which a working piston (5) is guided and connected by way of a piston rod (6) with the brake, wherein the working piston (5) when the motor (1) is switched on is brought from its lower end position against an external force into an upper end position by means of the operating fluid conveyed below the piston and the brake is lifted in that case and the working piston (5) when the motor (1) is switched off is brought into its lower end position again under the influence of the external force and the brake in that case drops in, characterised thereby, that when the motor (1) is switched on, an auxiliary piston (16) is initially moved simultaneously with the working piston (5) upwardly against an abutment against the force of a spring (17) by means of the operating fluid also conveyed below the auxiliary piston (16) and the working piston (5) subsequently reaches its upper end position, wherein the stroke of the working piston (5) is greater than the stroke of the auxiliary piston (16), that when the motor (1) is switched off, initially only the working piston (5) is moved downwardly whilst the operating fluid remains below the auxiliary piston (16), that the working piston (5) after a predetermined piston travel sets down by way of the piston rod (6) on the auxiliary piston (16) and thereby on the biassed spring (17), that the working piston (5) reaches its lower end position at reduced speed against the spring force of the spring (17) and the brake drops in under the influence of this force and that the operating fluid under the auxiliary piston (16) is let out thereupon, whilst the spring (17) is relieved and the full braking force builds up with the brake already dropped in.

3. Method according to claim 1, characterised thereby, that the air below the air piston (8) is relieved in accordance with a predetermined time function.

4. Method according to claim 2, characterised thereby, that the operating fluid under the auxiliary piston (16) is let out in accordance with a predetermined time function.

5. Method according to one of the claims 1 to 4, characterised thereby, that the external force, against which the working piston (5) is moved into its upper end position, is determined by a C-spring.

6. Method according to one of the preceding claims, characterised thereby, that the motor (1) is an electrical motor.

## Revendications

1. Procédé pour le fonctionnement en douceur d'un frein au moyen d'un dispositif de desserrage de frein comportant un moteur (1) et une pompe centrifuge avec un vérin hydraulique (4), dans lequel est guidé un piston de travail (5) qui est relié au frein, par une tige (6), le piston de travail (5) étant amené, alors que le moteur (1) est enclenché, de sa position de fin de course basse à sa position de fin de course haute, au moyen du liquide de fonctionnement, envoyé sous le piston, à l'encontre d'une force extérieure, et le frein étant alors desserré et, lorsque le moteur (1) est coupé, le piston de travail (5) étant à nouveau amené dans sa position de fin de course basse, sous l'effet de la force extérieure, et le frein retombant alors, caractérisé en ce que lorsque le moteur (1) est enclenché, la tige de piston (6) libère un piston à air (8) qui, sous l'effet d'un ressort (11), se déplace vers le haut, la course du piston à air (8) étant inférieure à celle du piston de travail (5), en ce que, lorsque le moteur (1) est coupé, seul le piston de travail (5) se déplace d'abord vers le bas, en ce qu'après un trajet de piston prédéterminé, le piston de travail (5) se place, par l'intermédiaire de la tige (6), sur le piston à air (8), en ce qu'ensuite, lors du déplacement commun vers le bas du piston de travail (5) et du piston à air (8), l'air est comprimé sous le piston à air (8) et une force antagoniste s'établit ainsi et le piston de travail (5) atteint sa position de fin de course basse, à une vitesse réduite et le frein retombe, avec une force réduite, sous l'effet de cette vitesse, et en ce qu'ensuite l'air est détendu sous le piston à air (8), la pleine force de freinage s'établissant alors que le frein est déjà retombé.

2. Procédé pour le fonctionnement en douceur d'un frein au moyen d'un dispositif de desserrage de frein comportant un moteur (1) et une pompe centrifuge avec un vérin hydraulique (4), dans lequel est guidé un piston de travail (5) qui est relié au frein, par une tige (6), le piston de travail (5) étant amené, alors que le moteur (1) est enclenché, de sa position de fin de course basse à sa position de fin de course haute, au moyen du liquide de fonctionnement, envoyé sous le piston, à l'encontre d'une force extérieure, et le frein étant alors desserré et, lorsque le moteur (1) est coupé, le piston de travail (5) étant à nouveau amené dans sa position de fin de course basse, sous l'effet de la force extérieure, et le frein retombant alors, caractérisé en ce que, lorsque le moteur (1) est enclenché, un piston auxiliaire (16) est d'abord déplacé conjointement avec le piston de travail (5), vers le haut jusqu'à une butée, à l'encontre de la force d'un ressort (17), au moyen du liquide de fonctionnement envoyé sous le piston auxiliaire (16) et ensuite, le piston de travail (5) atteint sa position de fin de course haute, la course du piston de travail (5) étant supérieure à celle du piston auxiliaire (16), en ce que, lorsque le moteur (1) est coupé, seul le piston de travail (5) est d'abord déplacé vers le bas, tandis que le liquide de fonctionnement reste sous le piston auxiliaire (16), en ce qu'après un trajet de piston prédéterminé, le piston de travail (5) se place, par l'intermédiaire de la tige de piston (6), sur le piston auxiliaire (16) et donc sur le ressort (17) précontraint, en ce que le piston de travail (5) atteint sa position de fin de course basse, à une vitesse réduite, à l'encontre de la force du ressort (17) et le frein retombe, sous l'effet de cette force et en ce qu'ensuite le liquide de fonctionnement est évacué sous le piston auxiliaire (16), le ressort (17) étant détendu et la pleine force de freinage étant établie, lorsque le frein est déjà retombé.

3. Procédé selon la revendication 1, caractérisé en ce que l'air est détendu sous le piston à air (8), après un fonctionnement dans le temps prédéterminé.

4. Procédé selon la revendication 2, caractérisé en ce que le liquide de fonctionnement est évacué sous le piston auxiliaire (16), après un fonctionnement dans le temps prédéterminé.

5. Procédé selon l'une des revendications 1 à 4, caractérisé en ce que la force extérieure, à l'encontre de laquelle le piston de travail (5) est déplacé dans sa position de fin de course haute, est déterminée par un ressort en col de cygne.

6. Procédé selon l'une des revendications précédentes, caractérisé en ce que le moteur (1) est un moteur électrique.
